# EUROPÄISCHE PATENTSCHRIFT

(11) **EP 2 370 245 B1**
(45) Veröffentlichungstag und Bekanntmachung des Hinweises auf die Patenterteilung: **10.04.2019**
(21) Anmeldenummer: 09774659.8
(22) Anmeldetag: 08.12.2009
(51) Int. Cl.: B29C 49/56, B29C 33/20, B29C 33/26

(54) **BLASFORM**
BLOW MOULD
MOULE DE SOUFFLAGE

(30) Priorität: 19.12.2008 DE 102008063939
(43) Veröffentlichungstag der Anmeldung: 05.10.2011
(73) Patentinhaber: Krones AG, 93073 Neutraubling (DE)
(72) Erfinder: HÖLLRIEGL, Thomas, 93073 Neutraubling (DE); SCHMID, Florian, 93073 Neutraubling (DE); SPITZER, Thomas, 93073 Neutraubling (DE); PHILIPP, Thomas, 93073 Neutraubling (DE); WINZINGER, Frank, 93073 Neutraubling (DE)
(74) Vertreter: Bittner, Bernhard
(86) Internationale Anmeldenummer: PCT/EP2009/066566
(87) Internationale Veröffentlichungsnummer: WO 2010/069808

(56) Entgegenhaltungen:
- EP-A1- 1 535 719
- EP-A2- 2 149 446
- EP-B1- 1 276 598
- WO-A2-2010/013211
- DE-A1- 10 152 050
- US-A1- 2006 275 525
- US-A1- 2007 026 098

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langen bekannt und weisen üblicherweise eine Vielzahl von Blasstationen auf, wobei an diesen Blasstationen Blasformen angeordnet sind, in deren Inneren die Kunststoffvorformlinge angeordnet werden, um beispielsweise mittels Druckluft zu Kunststoffbehältnissen expandiert zu werden.

Derartige Blasformen weisen dabei üblicherweise zwei Formhälften auf, die geöffnet und geschlossen werden können, um in ihren Inneren die Kunststoffbehältnisse aufzunehmen.

Während des eigentlichen Expansionsvorganges werden dabei diese Formhälften gegeneinander verriegelt, so dass sie sich während des eigentlichen Umformungsvorganges nicht öffnen können.

Aus der US 7,384,261 B2 ist eine Blasvorrichtung zum Herstellen von thermoplastischen Behältern bekannt. Bei dieser Vorrichtung ist ein Verriegelungsmechanismus vorgesehen, um zwei Blasformhälften miteinander zu verriegeln. Dieser Verriegelungsmechanismus weist dabei ein Verriegelungsstück auf, welches um eine Achse schwenkbar ist. Weiterhin kann ein Nockenmechanismus vorgesehen sein, um diesen Verriegelungsmechanismus zu aktivieren.

Aus der DE 42 12 583 A1 ist eine Vorrichtung zur Blasformung bekannt. Diese Vorrichtung weist dabei ebenfalls Formträger auf sowie eine Verriegelungseinrichtung zum Verriegeln dieser beiden Formträger. Dabei ist ein Verstellelement vorgesehen, welches im wesentlichen in Richtung einer Mittellinie der Blasform geführt ist.

Die DE 692 04 407 T2 beschreibt eine Vorrichtung zum Öffnen und Schließen einer geteilten Form. Dabei sind auch hier zwei Halbformen vorgesehen, die gegeneinander verschwenkbar sind. Weiterhin weist diese Vorrichtung zwei Betätigungsarme auf, die frei drehend mit einen ihrer Enden an den zwei Halbformen befestigt sind.

Die EP 1 276 598 B1 beschreibt ebenfalls eine Blasform und eine Blasmaschine. Bei dieser Blasmaschine ist eine Welle zum Ver- bzw. Entriegeln der jeweiligen Formhälften vorgesehen, wobei diese Welle eine solche Außenkontur hat, dass die Welle in einer Verriegelungsposition zumindest teilweise an einem Verriegelungselement anliegt und in einer Entriegelungsposition das besagte Verriegelungselement freigibt.

EP1535719 A1 offenbart den Gegenstand der Oberbegriffe der Ansprüche 1 und 14.

Der vorliegenden Erfindung liegt die Aufgabe zugrunde, die Betätigung eines entsprechenden Verriegelungsmechanismus zu vereinfachen und insbesondere auch ein schnelles, sicheres und genaues Ver- und Entriegeln zu ermöglichen. Dies wird erfindungsgemäß durch eine Vorrichtung nach Anspruch 1 und eine Blasform nach Anspruch 14 erreicht.

Vorteilhafte Ausführungsformen und Weiterbildungen sind Gegenstand der Unteransprüche.

Eine erfindungsgemäße Vorrichtung zum Umformen von Kunststoffvorformlingen zu Behältnissen ist in dem Anspruch 1 definiert.

Bevorzugt ist das Gegenelement eine Welle, und diese Welle weist eine solche Außenkontur auf, dass das Gegenelement in der Verriegelungsposition zumindest teilweise an dem Verriegelungselement anliegt und in der Entriegelungsposition das Verriegelungselement freigibt. Es wäre jedoch auch möglich, dass das Gegenelement eine Vielzahl von Haken aufweist, die durch die Drehung des Gegenelements geschwenkt werden und in einen Verriegelungsbereich des jeweils anderen Formteils eingreifen, um die Formteile gegeneinander zu verriegeln. Vorzugsweise handelt es sich bei den Formteilen um Halbschalen, welche im zusammengesetzten Zustand einen Vorformling bzw. ein Kunststoffbehältnis aufnehmen.

Vorteilhaft ist an dem Gegenelement ein antreibbares Element angeordnet, welches eine Führungsfläche aufweist, welche mit einem relativ zu dem Gegenelement beweglichen Führungsvorsprung derart zusammenwirkt, dass diese Relativbewegung des Führungsvorsprungs gegenüber der Führungsfläche eine Drehung des Gegenelements bewirkt. Dabei ist bevorzugt der Führungsvorsprung stationär angeordnet, und das Gegenelement bewegt sich gegenüber diesem Führungsvorsprung. Auf diese Weise kann eine Bewegung der gesamten Blasform in eine Drehbewegung des Gegenelements umgesetzt werden.

Vorzugsweise ist diese Führungsfläche wenigstens abschnittsweise gekrümmt. Dabei weicht besonders bevorzugt ein Krümmungsradius dieser Führungsfläche von einem Krümmungsradius eine Bewegungsbahn der Blasform ab, so dass auf diese Weise ein Einschwenken des Gegenelements bzw. der Welle möglich ist.

Bei einer weiteren vorteilhaften Ausführungsform ist wenigstens an dem Gegenelement oder an dem Betätigungselement ein Kegelrad angeordnet. Vorzugsweise ist dabei dieses Kegelrad endseitig an dem Gegenelement vorgesehen.

Bevorzugt wirkt dieses Kegelrad mit einem weiteren an dem Betätigungselement oder dem Gegenelement angeordneten Kegelrad zur Drehung des Gegenelements zusammen. Durch die Verwendung von Kegelrädern kann eine Antriebswelle gegenüber einer Längsrichtung des Bewegungselements bzw. dessen Drehachse geneigt werden, und auf diese Weise, wie unter Bezugnahme auf die Figuren gezeigt wird, die Umsetzung der Bewegung in besonders vorteilhafter Weise erfolgen.

Vorzugsweise ist das weitere Kegelrad an einem um eine Achse des weiteren Kegelrads schwenkbaren Hebel angeordnet. Durch ein Schwenken dieses Hebels erfolgt damit ein Drehen des weiteren Kegelrads und damit auch ein Drehen des erstgenannten Kegelrads und damit auch des Bewegungselements. Vorzugsweise ist dabei dieser Hebel in einer vertikalen Ebene schwenkbar.

In einer weiteren vorteilhaften Ausführungsform weist das Betätigungselement ein Eingriffsmittel auf, welches mit einem an dem Bewegungselement angeordneten Gewinde zusammenwirkt, um dessen Drehung zu bewirken. Vorzugsweise handelt es sich dabei bei diesem Gewinde um ein Steilgewinde, so dass durch eine Längsbewegung eine Drehung des Bewegungselements erzeugt wird. Umgekehrt könnte auch an dem Bewegungselement ein Eingriffelement vorgesehen sein, welches mit einem Gewinde des Betätigungselements zusammen wirkt. Auch könnte sowohl an dem Bewegungselement als auch dem Betätigungselement ein Gewinde vorgesehen sein. Das besagte Eingriffsmittel kann dabei in eine Windung des Gewindes des jeweils anderen Elements eingreifen.

Das besagte Betätigungselement ist in Richtung der Drehachse des Betätigungselements bewegbar. Durch diese Längsbewegung wird - wie oben erwähnt - eine Drehung des Bewegungselements bewirkt.

In einer weiteren vorteilhaften Ausführungsform handelt es sich bei dem Gewinde um ein Außengewinde. Dies bedeutet, dass an dem Bewegungselement ein Außengewinde vorgesehen ist, in welches ein Vorsprung des Betätigungselements eingreift. Durch eine Öffnung des Betätigungselements, an dessen Innenoberfläche das Eingriffselement angeordnet ist, kann das Bewegungselement bzw. das Gewinde durchgeführt werden. Das Eingriffselement kann dabei als Spitze ausgebildet sein.

In einer weiteren vorteilhaften Ausführungsform weist die Vorrichtung eine parallel zu dem Bewegungselement laufende Führungsstange zur Führung einer Bewegung des Betätigungselements auf. Auf diese Weise kann auch bei den schnellen Bewegungen eine sichere Führung des Betätigungselements erreicht werden. Das Betätigungselement wird bevorzugt durch eine stationär angeordnete Führungskurve bewegt. Es wäre jedoch auch möglich, dass eine Führungsrolle vorgesehen ist, um die Bewegung zu vereinfachen.

In einer weiteren vorteilhaften Ausführungsform weist das Betätigungselement einen gegenüber dem Bewegungselement beweglich angeordneten plattenförmigen Körper mit einer Ausnehmung auf, in welche wenigstens ein Abschnitt des Bewegungselements hineinragt. Bei dieser Ausführungsform ist als Betätigungsmechanismus eine Kulissenführung vorgesehen, in welcher das Bewegungselement geführt und gleichzeitig definiert gedreht wird.

Bevorzugt ist daher dieser plattenförmige Körper um eine Schwenkachse schwenkbar, welche parallel zu der Drehachse des Bewegungselements ist, jedoch nicht mit dieser Drehachse zusammenfällt.

Bei einer weiteren vorteilhaften Ausführungsform wirkt das Antriebselement mit einem endseitigen im Gegenelement angeordneten angetriebenen Element zusammen.

Bei einer weiteren Ausführungsform ist an dem Gegenelement ein erster Führungskörper angeordnet und an dem Betätigungselement ist ein zweiter Führungskörper angeordnet, wobei der erste Führungskörper gegenüber dem zweiten Führungskörper verschiebbar ist und durch eine Verschiebung des ersten Führungskörper gegenüber dem zweiten Führungskörper eine Drehung des Gegenelements bewirkt wird. Vorzugsweise handelt es sich bei einem der beiden Führungskörper um eine Führungsnut, in die der andere Führungskörper, der bevorzugt als Vorsprung oder Rolle ausgebildet ist, eingreift.

Durch eine Verschiebung des Vorsprungs gegenüber der Nut wird auch eine Drehung des Gegenelements erreicht. Vorzugsweise ist die Nut an dem Gegenelement ausgebildet und der Vorsprung an dem Betätigungselement. So wäre es beispielsweise möglich, dass es sich bei dem Betätigungselement um einen um eine vorgegebene Achse schwenkbaren Hebel handelt, an dem der Vorsprung bzw. die in die Nut eingreifende Rolle ausgebildet ist.

Die vorliegende Erfindung ist weiterhin auf eine Blasform gemäß Anspruch 14, insbesondere für eine Vorrichtung zum Umformen von Kunststoffvorformlingen zu Kunststoffbehältnissen gerichtet.

Weitere Ausführungen ergeben sich aus den beigefügten Zeichnungen.

Darin zeigen:
- Fig. 1: eine Darstellung einer Blasform;
- Fig. 2: eine schematische Darstellung zur Veranschaulichung eines Verriegelungsmechanismus;
- Fig. 3 a: eine schematische Darstellung zur Veranschaulichung eines Verriegelungsmechanismus;
- Fig. 4a - 4g: Verschiedene Darstellungen zur Veranschaulichung eines Verriegelungsmechanismus;
- Fig. 5a - 5f: Darstellungen einer erfindungsgemäßen Vorrichtung;
- Fig. 6a - 6h: Darstellung einer nicht erfindungsgemäßen Vorrichtung in einer vierten Ausführungsform;
- Fig. 7a - 7 b: Darstellungen einer weiteren nicht erfindungsgemäßen Vorrichtung; und
- Fig. 8a - 8d: Darstellungen einer weiteren nicht erfindungsgemäßen Vorrichtung.

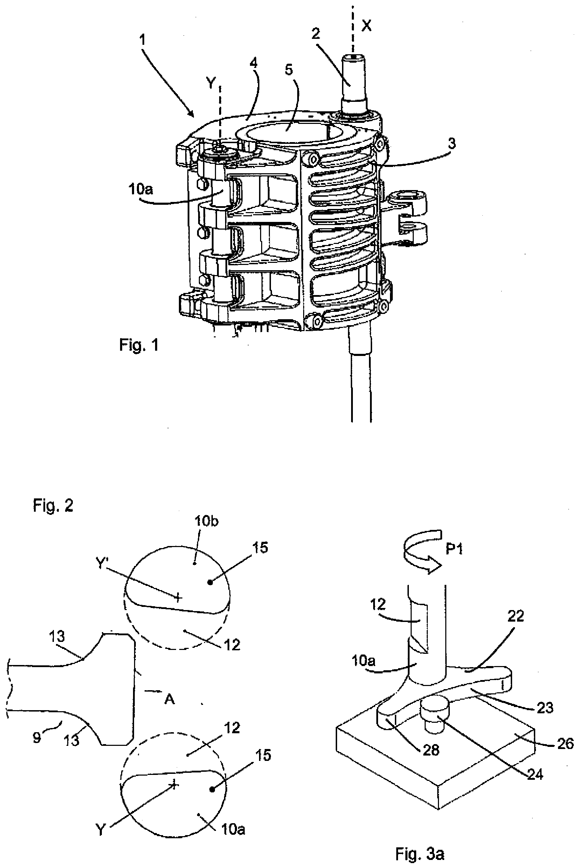

Fig. 1 zeigt eine Teilansicht einer Blasform. Diese Blasform 1 weist zwei um eine Verbindungsachse 2 drehbare als Formträger dienende Formhälften 3,4 auf, genauer eine erste Formhälfte 3 und eine zweite Formhälfte 4. Diese beiden Formhälften 3, 4 sind derart ausgestaltet, dass sie in einem verschlossenen Zustand einen inneren Hohlraum 5 bilden, in dem mittels (nicht gezeigter) Formeinsätze ein (nicht gezeigter) Vorformling in einem Streckblasprozess formgeblasen, das heißt auskonturiert, werden kann.

Zum Verschließen der beiden Formhälften 3, 4 werden diese um die Verbindungsachse 2 so geschwenkt, dass deren beiden seitliche Flächen aneinanderstoßen. In Fig. 1 ist ein geschlossener verriegelter Zustand der beiden Formhälften 3, 4 dargestellt. Das Bezugszeichen 10a bezieht sich auf ein Bewegungselement, welches gedreht werden kann, um die beiden Formhälften 3, 4 miteinander zu verriegeln.

Fig. 2 zeigt eine Draufsicht auf einen mittleren Bereich zur Veranschaulichung des Verriegelungselements. Dabei ist auch hier das Bewegungselement 10a vorgesehen, welches als Welle ausgestattet ist, die wiederum eine Ausnehmung 12 aufweist. Das Bezugszeichen 9 bezieht sich auf ein Verriegelungselement, welches entlang des Pfeils A zwischen das Bewegungselement 10a und ein weiteres Bewegungselement 10b, welches symmetrisch zu dem Bewegungselement 10 ausgebildet ist, eingeschoben werden kann. Die beiden Bewegungselemente 10a, 10b sind dabei um Achsen Y, Y' drehbar.

Zum Verriegeln des Verriegelungsmechanismus wird das Bewegungselement 10a, das heißt, die Welle 10, in einem vorgegebenen Winkel gedreht, so dass eine Kontur 15 in eine Ausnehmung 13 des Verriegelungselements 9 eingreift. Entsprechend greift auch ein Bereich des Bewegungselements 10b in den entsprechenden unteren Bereich bzw. die Ausnehmung 13 des Verriegelungselements 9 ein.

Bevorzugt ist eine Drehbewegung des Bewegungselements 10b an eine Drehbewegung des Bewegungselements 10a gekoppelt. Damit sind an dem Formteil 4 zwei Wellen 10a, 10b angebracht, die jeweils um eine durch sie verlaufende Längsachse zwischen der Verriegelungsposition und der Entriegelungsposition drehbar sind. Das Verriegelungselement 9 kann in der Entriegelungsposition zwischen den beiden Wellen 10a, 10b zumindest teilweise hindurchgeführt werden, und in der Verriegelungsposition liegen die Konturen 15 der beiden Bewegungselemente bzw. Wellen 10a, 10b zumindest teilweise so an dem Verriegelungselement 12 an, dass die Blasform 1 fest verriegelt ist.

Fig. 3a zeigt eine nicht erfindungsgemäße Vorrichtung. Man erkennt auch hier wieder das Bewegungselement 10a, welches die bereits in Fig. 2 erwähnte Ausnehmung 12 aufweist. Dieses Bewegungselement 10a, das heißt die Welle, kann dabei um den Pfeil P1 gedreht werden, um eine Verriegelung bzw. eine Entriegelung der Blasform zu bewirken. Zu diesem Zweck ist fest an dem Bewegungselement 10a ein antreibbares Element 22 angeordnet, wobei dieses antreibbare Element 22 eine Führungsfläche 23 aufweist, der gegenüber sich ein Führungsvorsprung 24 bewegt.

Genauer gesagt handelt es sich hier nicht um einen Führungsvorsprung, sondern um eine drehbare Führungsrolle, um auf diese Weise Reibungsverluste zu minimieren. Im Betrieb der Vorrichtung bewegt sich die Blasform und damit auch das Betätigungselement 10a entlang einer Kreisbahn, die üblicherweise durch den Teilkreisradius eines entsprechenden Trägers, an dem eine Vielzahl von Blasformen angeordnet sind, bestimmt wird. Bei dieser Kreisbewegung wird die Führungsfläche 23 an den Vorsprung 24 vorbeigeführt, und auf diese Weise wird das Bewegungselement 22 entlang des Pfeils P1 in definierter Weise gedreht. Diese Drehung bewirkt wiederum eine Ver- bzw. Entriegelung der Blasform. In den Endbereichen 28 weist das antreibbare Element jeweils abgerundete Oberflächen auf, damit der Verrriegelungs- bzw. Entriegelungsvorgang reibungslos abläuft.

Bei einer Bewegung des Bewegungselements gegenüber dem Führungsvorsprung 24 in einer vorgegebenen Richtung wird die Blasform entweder verriegelt oder entriegelt. Der jeweils umgekehrte Vorgang, das heißt, das Entriegeln oder Verriegeln, ist durch eine weitere Führungsfläche auf der Rückseite des antreibbaren Elements 22 möglich. Es wäre jedoch auch möglich, dass eine Rückdrehung des Bewegungselements 10a durch andere Mechanismen, wie beispielsweise Federmechanismen, bewirkt wird. Auch wäre es möglich, dass ein entsprechendes antreibbares Element auch an dem zweiten Bewegungselement 11 (vgl. Fig. 2) angeordnet ist, und dieses weitere antreibbare Element für den jeweils umgekehrten Vorgang, das heißt, das Entriegeln bzw. Verriegeln vorgesehen ist.

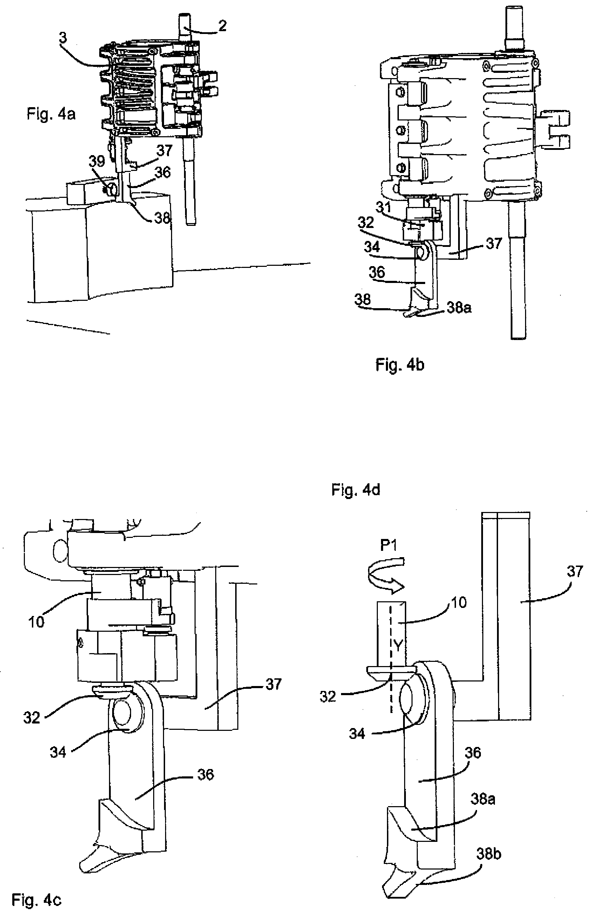

Fig. 4a zeigt eine weitere nicht erfindungsgemäße Vorrichtung. In diesem Fall ist ebenfalls eine Führungseinrichtung 39 in Form eines Führungsrades vorgesehen, wobei dieses Führungsrad einen Hebel 36 betätigt, der wiederum an einen gegenüber der Blasform 1 festen Träger 37 angeordnet ist. Fig. 4b zeigt eine detailliertere Darstellung der in 4a gezeigten Vorrichtung. In diesem Falle ist an dem Bewegungselement 10 ein erstes Kegelrad 32 vorgesehen, welches mit einem zweiten an dem Hebel 36 angeordneten Kegelrad 34 zusammenwirkt.

Damit wird durch ein Schwenken des Hebels 36 um die Achse des zweiten Kegelrads 14 das Bewegungselement 10 in Abhängigkeit von einem Schwenkwinkel in definierter Weise gedreht. An dem unteren Ende weist der Hebel 36 wiederum eine Führungsfläche 38 auf, welche mit der oben erwähnten Führungseinrichtung 39 bzw. dem Rad zusammenwirkt. Durch ein Bewegungselement 10 gegenüber dem Rad 39 wird ein Schwenken des Hebels bewirkt. Entsprechende Führungskurven, an denen das Rad 39 angeordnet ist, können jedoch auch in anderer Weise als der dargestellten ausgeführt sein.

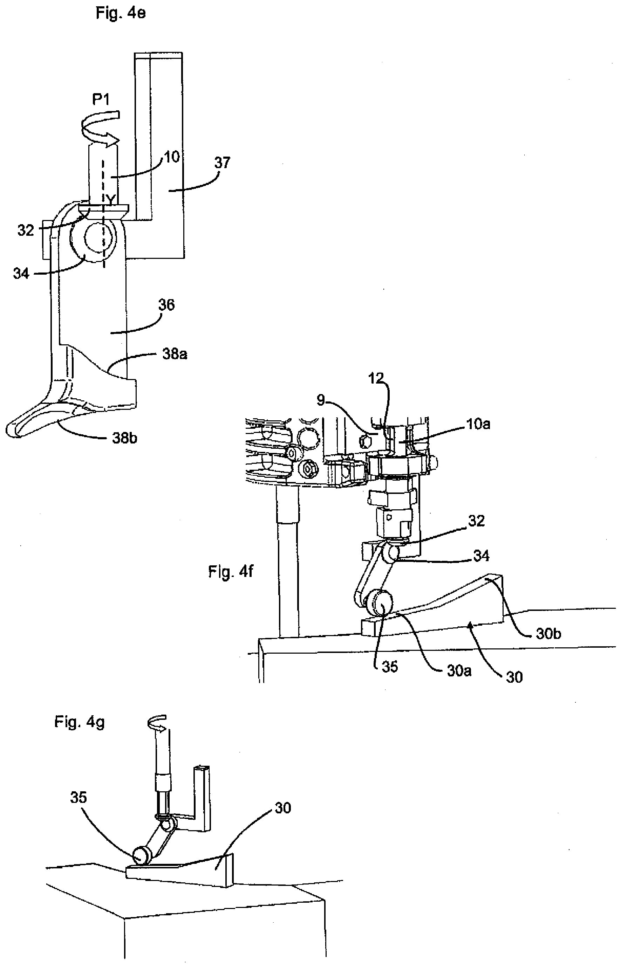

Die Fig. 4c bis 4e zeigen weitere Darstellungen des Verriegelungsmechanismus. Dabei ist insbesondere auch der Hebel 36 in mehreren perspektivischen Darstellungen gezeigt. Am unteren Ende des Hebels 36 sind dabei die besagte Führungsfläche 38a sowie eine weitere Führungsfläche 38b angeordnet. Durch diese beiden unterschiedlichen Führungsflächen kann durch entsprechend angeordnete Führungskurven sowohl ein Schwenken des Hebels in Fig. 4e nach links als auch ein Schwenken des Hebels in Fig. 4e nach rechts bewerkstelligt werden. Es wäre jedoch auch möglich, dass ein Rückschwenken des Hebels 36 durch dessen Eigengewicht erfolgt. Jedoch könnte auch hier eine Feder zur Rückstellung vorgesehen sein. Diese Feder könnte beispielsweise zwischen dem Träger 37 und dem Hebel 36 vorgesehen sein, aber auch an einem Bereich des Bewegungselements.

Die Fig. 4f und 4g zeigen eine weitere modifizierte nicht erfindungsgemäße Vorrichtung. Auch hier ist ein schwenkbarer Hebel 36 vorgesehen, an dessen unterem Ende jedoch ein Rad 35 angeordnet ist, welches gegenüber einer Führungskurve 30 bewegbar ist. Wie in den Fig. 4f und 4g gezeigt, kann eine Bewegung des Bewegungselements 10 entlang des Pfeils P auch das Rad 35 entlang des Pfeils P gegenüber der Führungskurve 30 bewegt werden.

Auf diese Weise wird der Hebel 36 im Uhrzeigersinn geschwenkt, und damit auch das Bewegungselement 10 gedreht. Zum Rückschwenken des Hebels 36 ist es möglich, dass die Führungskurve 30a wieder absinkt und damit auch der Hebel 36 mit einer Bewegung des Bewegungselements 10 in dem Uhrzeigersinn zurückschwingt und auf diese Weise auch das Bewegungselement 10 wieder in genau definierter Weise gedreht wird. Der Drehwinkel, um den das Bewegungselement 10 gedreht wird, wird damit durch den Höhenunterschied zwischen dem Bereich 30b und 30a der Führungskurve 30 festgelegt. Bevorzugt ist jedoch eine weitere Führungsebene (nicht gezeigt) vorgesehen welche hier oberhalb des Rads 35 vorgesehen ist und in den Bewegungsrichtungen des Hebels absinkt.

Das Kegelrad 34 ist dabei in einer (nicht gezeigten) Aufnahmewelle angeordnet, wobei zur Führung des Hebels 36 noch Lagereinrichtungen bzw. Zwischenwellen vorgesehen sein können. Die Kurvenrolle 35 ist dabei ebenfalls bevorzugt drehbar gelagert.

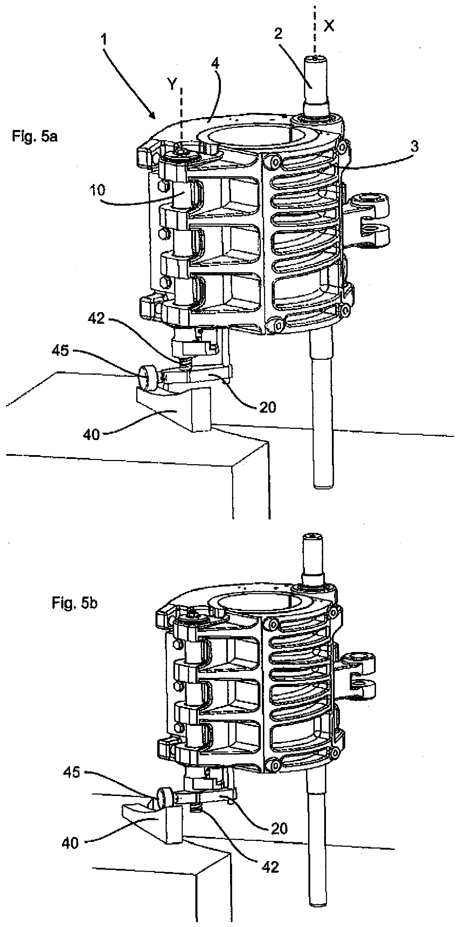

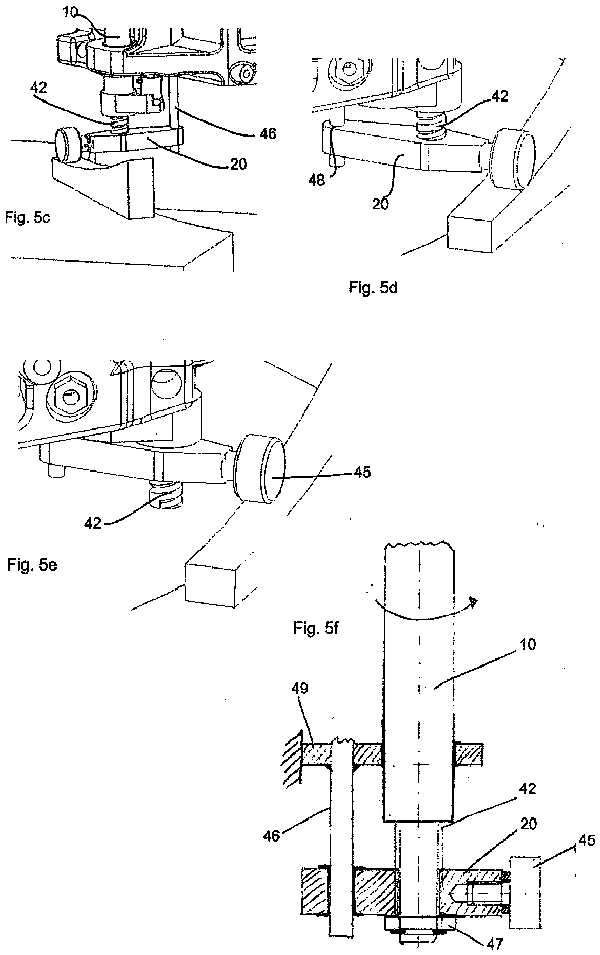

Die Fig. 5a bis 5f zeigen eine Ausführungsform einer erfindungsgemäßen Vorrichtung.

Bei dieser Ausführungsform ist ein Betätigungselement 20 vorgesehen, welches in Richtung der Achse Y, das heißt entlang des Pfeils P2, auf- und abwärts bewegbar ist. Dabei wird ein Gewinde 42 des Bewegungselements 10a durch dieses Betätigungselement 20 hindurchgeführt, und bei einer Bewegung des Betätigungselements 20 wird auf diese Weise eine Drehung des Bewegungselements 10a bewirkt. Bevorzugt handelt es sich bei dem Gewinde 42 um ein Steilgewinde, so dass eine Drehung durch eine Verschiebung des Betätigungselements 20 leichter möglich ist. Ähnlich der in den Figuren 4e bis 4f gezeigten Vorrichtung ist auch hier eine Kurvenrolle 45 vorgesehen, die gegenüber einer Führungskurve 40 bewegt wird, um das Betätigungselement anzuheben. Eine weitere (nicht gezeigte) Führungsebene kann zum Absenken der Kurvenrolle vorgesehen sein.

Das Bezugszeichen 46 bezieht sich auf eine weitere Stange, die hier als Verdrehsicherung bzw. als Ansteuerhebel dient.
Auf diese Weise wird verhindert, dass sich das Betätigungselement 20 um das Gewinde 42 dreht, bzw. die Längsbewegung entlang des Pfeils P2 wird durch diese Stange 46 gesichert. Dabei wäre es möglich, dass die Stange 46 starr an der Blasform 1 angeordnet ist und sich durch ein Loch 47 des Betätigungselements 20 hindurcherstreckt, und damit das Betätigungselement 20 gegenüber der Stange 46 bewegbar ist. Es wäre jedoch auch möglich, dass die Stange 46 fest an dem Betätigungselement 20 angeordnet ist, und wiederum in Längsrichtung verschiebbar an der Blasform 1 angeordnet ist. Das Bezugszeichen 48 bezieht sich auf ein Gehäuse- bzw. eine Aufnahme, die unter anderem auch zur Lagerung der Stange 46 dienen kann.

Im Inneren des Betätigungselements 20 kann dabei entweder ein Innengewinde vorgesehen sein oder auch ein spitz zulaufender Körper 49, der in das Gewinde 42 eingreift und damit bei einer Relativbewegung das Betätigungselement 20 entlang des Pfeils P2 eine Drehung des Bewegungselements 10 verursacht. An dem unteren Ende des Bewegungselements kann ein Anschlag 47 vorgesehen sein, der die Relativbewegung des Betätigungselements gegenüber dem Bewegungselement 10 nach unten begrenzt.

Bei der in Fig. 5d gezeigten Situation ist das Betätigungselement 20 weitgehend abgesenkt, so dass der Gewindebereich 42 oberhalb des Betätigungselements verläuft. Bei der in Fig. 5e gezeigten Situation ist das Betätigungselement angehoben, so dass das Gewinde 42 nach unten aus dem Betätigungselement 20 herausragt.

In Fig. 5f ist weiterhin ein Abschlusselement 47 vorgesehen, welches an dem unteren Ende des Gewindes angeordnet ist und welches eine Bewegung des Gewindes 42 gegenüber dem Betätigungselement begrenzt, so dass das Betätigungselement 20 nicht von dem Gewinde abfallen kann.

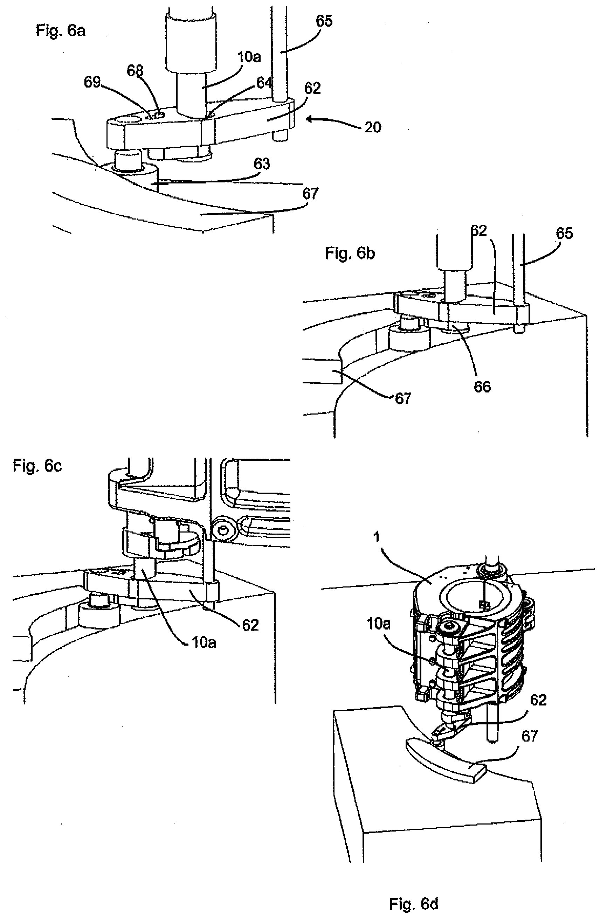

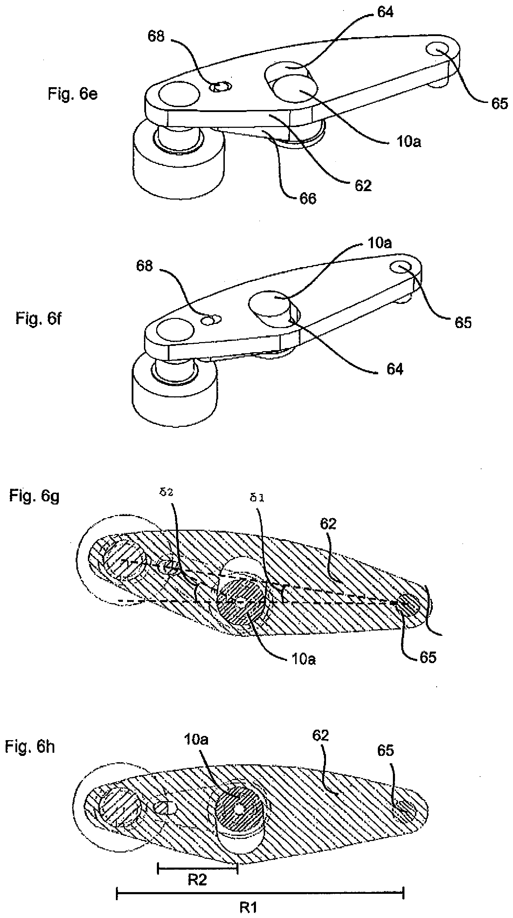

Die Fig. 6a - 6h zeigen eine weitere nicht erfindungsgemäße Vorrichtung. In diesem Falle erstreckt sich das Bewegungselement 10 a durch das Betätigungselement 20 bzw. einen Verstellhebel 62 dieses Betätigungselement 20 hindurch. Zu diesem Zweck weist der Betätigungshebel 62 eine Öffnung 64 auf, welche hier langlochartig ausgebildet ist und das Bewegungselement 10a aufnimmt. Unterhalb dieses Verstellhebels 62 ist ein Verbindungsglied 66 vorgesehen, welches einerseits drehfest mit dem Bewegungselement 10a ausgebildet ist und andererseits einen Stift 68 aufweist, der durch eine weitere Öffnung 69 in den Verstellhebel 62 ragt. Dieser Verstellhebel ist dabei schwenkbar um eine Stange 65 bzw. deren Drehachse angeordnet. Das Bezugszeichen 67 bezeichnet wieder eine Führungskurve des Verstellhebels 62.

Das Bezugszeichen 63 bezieht sich auf eine Führungsrolle, welche ein Verschwenken des Verstellhebels 62 bewirkt. Damit kann durch das gezielte verschwenken des Verstellhebels 62 eine ebenso definierte Drehung des Bewegungselements 10a erreicht werden.

Die Fig. 6e - 6h veranschaulichen eine entsprechende durch eine Verschwenkung des Verstellhebels 62 bewirkte Drehung des Bewegungselements 10a. Man erkennt, dass der Verstellhebel 62 um einen Winkel δ1 schwenkbar ist. Ein Schwenken um diesen Winkel δ1 bewirkt jedoch andererseits aufgrund des Zusammenspiels der beiden Öffnungen 64, 69 ein Verschwenken des Bewegungselements 10 um den Winkel δ2, der hier größer ist als der besagte Winkel δ1. Damit ist ein geringerer Verstellwinkel nötig, um eine entsprechend höhere Drehbewegung des Bewegungselements 10a zu erreichen. Das Verhältnis zwischen den beiden Winkeln δ1 und δ2 kann über die in den Figuren 6g und 6h gezeigten Radien R1 und R2 bzw. deren Verhältnis zueinander eingestellt werden.

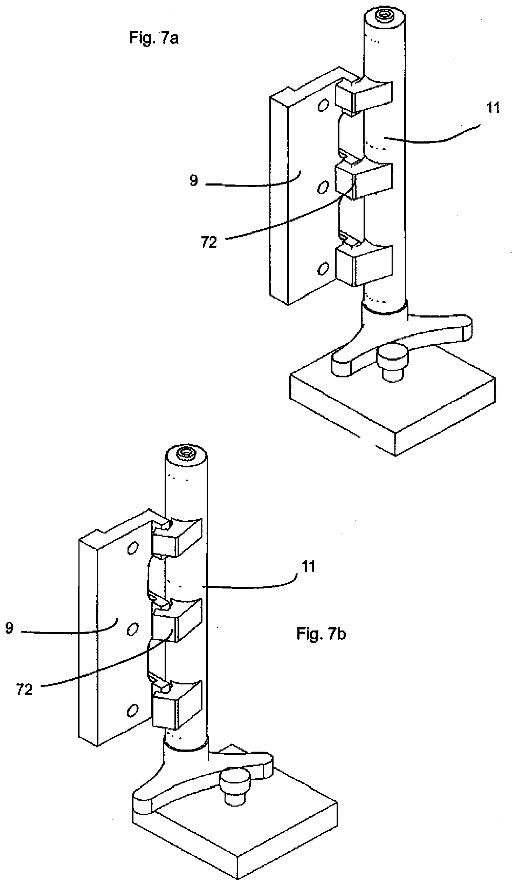

Die Figuren 7a und 7b zeigen eine weitere nicht erfindungsgemäße Vorrichtung. Diese Vorrichtung ähnelt der in Figur 3a gezeigten Vorrichtung, wobei hier jedoch das Bewegungselement 10a in anderer Weise gestaltet ist. Dabei weist das Bewegungselement 10a hier drei Eingriffselemente 72 auf, welche in den Verriegelungskörper 9 in einem Verriegelungszustand eingreifen. Die Betätigung des hier gezeigten Bewegungselements 11 erfolgt jedoch in der gleichen Weise wie unter Bezugnahme auf Figur 3a veranschaulicht. Der Fachmann erkennt, dass auch die anderen in den Figuren gezeigten Bewegungsmechanismen für das Bewegungselement 11 Anwendung finden können.

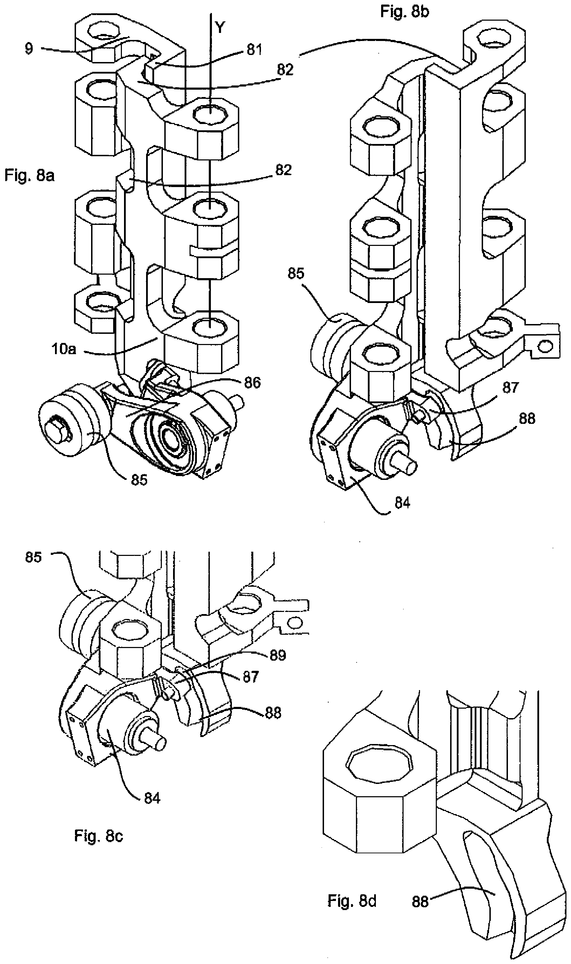

Die Fig. 8a - 8d zeigen eine weitere nicht erfindungsgemäße Vorrichtung. Dabei ist hier wiederum eine Kurvenrolle 85, genauer, eine doppelte Kurvenrolle 85 vorgesehen, die an einer (nicht gezeigten) Kurvenbahn entlang läuft. An dieser Kurvenrolle ist ein Hebel 86 angeordnet, der durch eine Bewegung der Kurvenrolle in Drehung versetzt wird. Fest an diesem Hebel 86 angeordnet ist ein Eingriffselement, welches ein Schwenken des Gegenelements 10a um die Achse Y bewirkt.

Durch ein Schwenken des Gegenelements 10a kann ein Eingriff zwischen Haken 82 und entsprechenden Gegenhaken 81 hergestellt oder gelöst werden. In Fig. 8c ist der Eingriffsmechanismus genauer erläutert. Der Hebel 86 ist, wie gesagt, schwenkbar an einem festen Träger 84 angeordnet. Weiterhin ist an dem Hebel 86 ein Eingriffskörper, genauer gesagt, eine an einem Rollenträger 87 angeordnete Rolle 89 vorgesehen, welche in einer Nut 88, welche an bzw. in dem Gegenelement 10a ausgebildet ist, verläuft. Dabei handelt es sich bei der Nut 88 um eine dreidimensionale Nut und eine Bewegung der Rolle 89 in dieser Nut führt zu einem Schwenken des Gegenelements 10a um die Achse Y. Man erkennt, dass die Nut einen gekrümmten Verlauf aufweist und die Rolle ohne Verkantungen in dieser Nut 88 abrollen kann. Bevorzugt ist eine Nutbreite der Nut 88 geringfügig größer als ein Durchmesser der Rolle 89. Es wäre auch denkbar, die Rolle 89 als Doppelrolle auszuführen, um ein Drehen der Rolle 89 in zwei Drehrichtungen, die je nach Belastungsfall auftreten können, zu verhindern, um den Verschleiß der Rolle 89 und der Nut 88 zu reduzieren.

Der andere Haken bzw. das Verriegelungselement 9 sind bei der in den Fig. 8a - 8d gezeigten Vorrichtung nicht schwenkbar, es wäre jedoch auch möglich, beide Haken zum Öffnen bzw. Schließen der Blasform zu verschwenken. Damit ist bei dieser Vorrichtung direkt in dem Gegenelement eine Kurve 88 zum Öffnen und Schließen der Blasform integriert. Die Kurve zum Bewegen der Rolle 85 wird wiederum von einer zur Maschine festen Kurve gesteuert, wenn die Blasstationen im Rundlauf an dieser Kurve vorbeikommen. Weiterhin wäre es auch denkbar, dass in den Bewegungsablauf zwischen dem Hebel 86 und dem Träger 84 eine Rutschkupplung integriert ist, mit welcher auf ein Verklemmen der Haken 82 und 81 reagiert werden kann.

In einer weiteren Ausführung wäre es auch möglich, am Bewegungselement 10 bzw. 11 ein Stirnrad vorzusehen, welches mit einem weiteren als Betätigungselement wirkenden Stirnrad zusammenwirkt, um eine Drehung des Bewegungselement zu erreichen. Dabei kann in einem weiteren Zahnrad bzw. Stirnrad wiederum ein Hebel angeordnet sein, der durch eine Führungskurve geschwenkt wird um auf diese Weise eine Drehbewegung des Bewegungselements zu erreichen.

Durch entsprechende Größenverhältnisse der beiden Stirnräder die damit festgelegt werden, bei welchem Grad an Schwenkung besagten Hebels welche Drehwinkel des Bewegungselements erreicht werden können.

## Patentansprüche

1. Vorrichtung zum Umformen von Kunststoffvorformlingen zu Behältnissen mit wenigstens einer Blasform (1) zur Aufnahme der Kunststoffvorformlinge, wobei diese Blasform (1) zwei Formteile (3, 4), aufweist, welche bezüglich einander um eine Verbindungsachse (2) schwenkbar sind, mit wenigstens einem an einem der Formteile (3, 4) angeordneten Verriegelungselement (9), welches mit wenigstens einem an dem anderen Formteil (4, 3) angeordneten Gegenelement (10a, 10b) zusammenwirkt, um die beiden Formteile (3 ,4) gegeneinander zu verriegeln, wobei das Gegenelement (10a, 10b) ein um eine im wesentlichen parallel zu der Verbindungsachse (2) angeordnete Achse (Y, Y') angeordnetes Gegenelement (10a, 10b) ist, welches zwischen einer Verriegelungsposition, in der die Blasform (1) verriegelt ist, und einer Entriegelungsposition, in der die Blasform (1) geöffnet werden kann, drehbar ist, wobei das Gegenelement (10a, 10b) derart beschaffen ist, dass das Gegenelement (10a, 10b) in der Verriegelungsposition zumindest teilweise an dem Verriegelungselement (9) anliegt und in der Entriegelungsposition das Verriegelungselement (9) freigibt, wobei die Vorrichtung ein Betätigungselement (20) zum Drehen des Gegenelements (10a, 10b) aufweist, **dadurch gekennzeichnet, dass** dieses Betätigungselement (20) in Richtung der Drehachse (Y) des Gegenelements (10a, 10b) bewegbar ist und ein Antriebselement aufweist, welches mit dem Gegenelement (10a, 10b) zusammenwirkt, um dieses zu betätigen.

2. Vorrichtung nach Anspruch 1, **dadurch gekennzeichnet, dass** das Gegenelement (10a, 10b) eine Welle ist und diese Welle eine solche Aussenkontur hat, dass das Gegenelement (10a, 10b) in der Verriegelungsposition zumindest teilweise an dem Verriegelungselement (9) anliegt und in der Entriegelungsposition das Verriegelungselement (9) freigibt.

3. Vorrichtung nach wenigstens einem der vorangegangenen Ansprüche, **dadurch gekennzeichnet, dass** an dem Gegenelement (10a, 10b) ein antreibbares Element (22) angeordnet ist, welches eine Führungsfläche (23) aufweist, welche mit einem relativ zu dem Gegenelement (10a, 10b) beweglichen Führungsvorsprung (24) derart zusammenwirkt, dass diese Relativbewegung des Führungsvorsprungs gegenüber der Führungsfläche eine Drehung des Gegenelements bewirkt.

4. Vorrichtung nach Anspruch 3, **dadurch gekennzeichnet, dass** die Führungsfläche (23) wenigstens abschnittsweise gekrümmt ist.

5. Vorrichtung nach wenigstens einem der vorangegangenen Ansprüche, **dadurch gekennzeichnet, dass** wenigstens an dem Gegenelement (10a, 10b) oder an dem Betätigungselement (20) ein Kegelrad (32) angeordnet ist.

6. Vorrichtung nach Anspruch 5, **dadurch gekennzeichnet, dass** das Kegelrad (32) mit einem weiteren an dem Betätigungselement (20) oder dem Gegenelement (10a, 10b) angeordneten Kegelrad (34) zur Drehung des Gegenelements (10a, 10b) zusammenwirkt.

7. Vorrichtung nach Anspruch 6, **dadurch gekennzeichnet, dass** das weitere Kegelrad an einem um eine Achse des weiteren Kegelrads (34) schwenkbaren Hebel (36) angeordnet ist.

8. Vorrichtung nach Anspruch 1, **dadurch gekennzeichnet, dass** das Betätigungselement (20) ein Eingriffsmittel aufweist, welches mit einem an dem Gegenelement (10a, 10b) angeordneten Gewinde (42) zusammenwirkt, um dessen Drehung zu bewirken.

9. Vorrichtung nach Anspruch 8, **dadurch gekennzeichnet, dass** das erste Gewinde ein Innengewinde (42) und das zweite Gewinde ein Außengewinde ist.

10. Vorrichtung nach Anspruch 8, **dadurch gekennzeichnet, dass** die Vorrichtung eine parallel zu dem Gegenelement (10a, 10b) verlaufende Führungsstange (46) zur Führung einer Bewegung des Betätigungselements (20) aufweist.

11. Vorrichtung nach Anspruch 1, **dadurch gekennzeichnet, dass** das Betätigungselement (20) einen gegenüber dem Gegenelement (10a, 10b) beweglich angeordneten plattenförmigen Körper (62) mit einer Ausnehmung (64) aufweist, in welche wenigstens ein Abschnitt des Gegenelements (10a, 10b) hineinragt.

12. Vorrichtung nach Anspruch 11, **dadurch gekennzeichnet, dass** der plattenförmige Körper (62) um eine Schwenkachse schwenkbar ist, welche parallel zu der Drehachse (Y) des Gegenelements {10a, 10b) ist.

13. Vorrichtung nach wenigstens einem der vorangegangenen Ansprüche, **dadurch gekennzeichnet, dass** das Antriebselement mit einem endseitig an dem Gegenelement (10a, 10b) angeordneten angetriebenen Element zusammenwirkt.

14. Blasform (1), insbesondere für eine Vorrichtung zum Umformen von Kunststoffvorformlingen zu Behältnissen, wobei diese Blasform (1) zwei Formteile (4, 3) aufweist, welche bezüglich einander um eine Verbindungsachse (2) schwenkbar sind, mit wenigstens einem an einem der Formteile (4, 3) angeordneten Verriegelungselement (9), welches mit wenigstens einem an dem anderen Formteil (3, 4) angeordneten Gegenelement (10a, 10b) zusammenwirkt, um die beiden Formteile (4, 3) gegeneinander zu verriegeln, wobei das Gegenelement (10a, 10b) ein um eine parallel zu der Verbindungsachse (2) angeordnete Achse (Y, Y') angeordnetes Gegenelement (10a, 10b) ist, welches zwischen einer Verriegelungsposition, in der die Blasform (1) verriegelt ist, und einer Entriegelungsposition, in der die Blasform (1) geöffnet werden kann, drehbar ist, wobei das Gegenelement (10a, 10b) derart beschaffen ist, dass das Gegenelement (10a, 10b) in der Verriegelungsposition zumindest teilweise an dem Verriegelungselement (9) anliegt und in der Entriegelungsposition das Verriegelungselement (9) freigibt wobei ein Betätigungselement (20) zum Drehen des Gegenelements (10a, 10b) vorgesehen ist, **dadurch gekennzeichnet, dass** dieses Betätigungselement (20) in Richtung der Drehachse (Y) des Gegenelements (10a, 10b) bewegbar ist und ein Antriebselement aufweist, welches mit dem Gegenelement (10a, 10b) zusammenwirkt, um dieses zu betätigen.

## Claims

1. An apparatus for moulding plastic preforms into containers, including at least one blow mould (1) for receiving the plastic preforms, said blow mould (1) including two mould parts (3, 4) that can be pivoted relative to each other about a connection axis (2), including at least one locking element (9) arranged on one of the mould parts (3, 4), which locking element cooperates with at least one counter element (10a, 10b) arranged on the other mould part (4, 3), in order to lock the two mould parts (3, 4) against each other, said counter element (10a, 10b) being a counter element (10a, 10b) arranged essentially parallel to the axis (Y, Y') arranged on the connecting axis (2), which counter element is rotatable between a locking position in which the blow mould is locked and an unlocking position in which the blow mould can be opened, said counter element (10a, 10b) being designed in such a way that the counter element (10a, 10b) rests in the locking position at least partially on the locking element (9) and in the unlocking position releases the locking element (9), wherein the apparatus includes an actuating element (20) for rotating the counter element (10a, 10b), **characterized in that** said actuating element (20) is movable in the direction of the rotary axis (Y) of the counter element (10a, 10b) and includes a drive element cooperating with the counter element (10a, 10b) so as to actuate the same.

2. The apparatus as claimed in claim 1, **characterized in that** the counter element (10a, 10b) is a shaft and this shaft has an external contour such that the counter element (10a, 10b) in its locking position rests at least partially on the locking element (9) and in the unlocking position releases the locking element (9).

3. The apparatus as claimed in at least one of the preceding claims, **characterized in that** a drivable element (22) is arranged on the counter element (10a, 10b), which drivable element includes a guiding surface (23) which cooperates with a guiding protrusion (24) movable relative to the counter element (10a, 10b) in such a way that this relative movement of the guiding protrusion causes a rotation of the counter element relative to the guiding surface.

4. The apparatus as claimed in claim 3, **characterized in that** the guiding surface (23) is curved at least in sections.

5. The apparatus as claimed in at least one of the preceding claims, **characterized in that** a bevel gear (32) is arranged at least on the counter element (10a, 10b) or on the actuating element (20).

6. The apparatus as claimed in claim 5, **characterized in that** the bevel gear (32) cooperates with a further bevel gear (34) arranged on the actuating element (20) or on the counter element (10a, 10b) so as to rotate the counter element (10a, 10b).

7. The apparatus as claimed in claim 6, **characterized in that** the further bevel gear is arranged on a lever (36) pivotable about an axis of the further bevel gear (34).

8. The apparatus as claimed in claim 1, **characterized in that** the actuating element (20) includes engagement means which cooperate with a thread (42) arranged on the counter element (10a, 10b) so as to cause the rotation thereof.

9. The apparatus as claimed in claim 8, **characterized in that** the first thread is an internal thread (42) and the second thread is an external thread.

10. The apparatus as claimed in claim 8, **characterized in that** the apparatus includes a guiding rod (46) extending parallel to the counter element (10a, 10b) for guiding a movement of the actuating element (20).

11. The apparatus as claimed in claim 1, **characterized in that** the actuating element (20) includes a plate-shaped body (62) which is arranged to be movable relative to the counter element (10a, 10b) and which has a recess (64), with at least a section of the counter element (10a, 10b) protruding into said recess.

12. The apparatus as claimed in claim 11, **characterized in that** the plate-shaped body (62) can be pivoted about a pivot axis that is parallel to the rotary axis (Y) of the counter element (10a, 10b).

13. The apparatus as claimed in at least one of the preceding claims, **characterized in that** the drive element cooperates with a driven element arranged at the end of the counter element (10a, 10b).

14. A blow mould (1), in particular for an apparatus for moulding plastic preforms into containers, said blow mould (2) including two mould parts (4, 3) that can be pivoted relative to each other about a connection axis, including at least one locking element (9) arranged on one of the mould parts (4, 3), which locking element cooperates with at least one counter element (10a, 10b) arranged on the other mould part (3, 4), in order to lock the two mould parts (4, 3) against each other, said counter element (10a, 10b, 11) being a counter element (10a, 10b) arranged parallel to the axis (Y,Y') arranged on the connecting axis (2), which counter element is rotatable between a locking position in which the blow mould is locked and an unlocking position in which the blow mould can be opened, said counter element being designed in such a way that the counter element (10a, 10b) rests in the locking position at least partially on the locking element and in the unlocking position releases the locking element, wherein an actuating element (20) for rotating the counter element (10a, 10b) is provided, **characterized in that** said actuating element (20) is movable in the direction of the rotary axis (Y) of the counter element (10a, 10b) and includes a drive element cooperating with the counter element (10a, 10b) so as to actuate the same.

## Revendications

1. Dispositif de transformation de préformes en plastique en récipients avec au moins un moule de soufflage (1) pour la réception des préformes en plastique, dans lequel ce moule de soufflage (1) présente deux parties de moule (3, 4), lesquelles sont pivotantes l'une par rapport à l'autre autour d'un axe de liaison (2), avec au moins un élément de verrouillage (9) agencé au niveau d'une des parties de moule (3, 4), lequel coopère avec au moins un contre-élément (10a, 10b) agencé au niveau de l'autre partie de moule (4, 3), pour verrouiller l'une contre l'autre les deux parties de moule (3, 4), dans lequel le contre-élément (10a, 10b) est un contre-élément (10a, 10b) agencé autour d'un axe (Y, Y') agencé sensiblement parallèlement à l'axe de liaison (2), lequel est rotatif entre une position de verrouillage, dans laquelle le moule de soufflage (1) est verrouillé, et une position de déverrouillage, dans laquelle le moule de soufflage (1) peut être ouvert, dans lequel le contre-élément (10a, 10b) est de nature telle que le contre-élément (10a, 10b) s'appuie, dans la position de verrouillage, au moins en partie sur l'élément de verrouillage (9) et libère l'élément de verrouillage (9) dans la position de déverrouillage, dans lequel le dispositif présente un élément d'actionnement (20) pour la rotation du contre-élément (10a, 10b), **caractérisé en ce que** cet élément d'actionnement (20) est mobile en direction de l'axe de rotation (Y) du contre-élément (10a, 10b) et présente un élément d'entraînement, lequel coopère avec le contre-élément (10a, 10b) pour actionner celui-ci.

2. Dispositif selon la revendication 1, **caractérisé en ce que** le contre-élément (10a, 10b) est un arbre et cet arbre a un tel contour extérieur que le contre-élément (10a, 10b) s'appuie, dans la position de verrouillage, au moins en partie sur l'élément de verrouillage (9) et libère l'élément de verrouillage (9) dans la position de déverrouillage.

3. Dispositif selon au moins l'une quelconque des revendications précédentes, **caractérisé en ce qu'**un élément pouvant être entraîné (22), lequel présente une surface de guidage (23), laquelle coopère avec une saillie de guidage (24) mobile par rapport au contre-élément (10a, 10b) de sorte que ce mouvement relatif de la saillie de guidage par rapport à la surface de guidage entraîne une rotation du contre-élément, est agencé au niveau du contre-élément (10a, 10b).

4. Dispositif selon la revendication 3, **caractérisé en ce que** la surface de guidage (23) est incurvée au moins par section.

5. Dispositif selon au moins l'une quelconque des revendications précédentes, **caractérisé en ce qu'**au moins une roue conique (32) est agencée au niveau du contre-élément (10a, 10b) ou au niveau de l'élément d'actionnement (20).

6. Dispositif selon la revendication 5, **caractérisé en ce que** la roue conique (32) coopère avec une autre roue conique (34) agencée au niveau de l'élément d'actionnement (20) ou du contre-élément (10a, 10b) pour la rotation du contre-élément (10a, 10b).

7. Dispositif selon la revendication 6, **caractérisé en ce que** l'autre roue conique est agencée au niveau d'un levier (36) pivotant autour d'un axe de l'autre roue conique (34).

8. Dispositif selon la revendication 1, **caractérisé en ce que** l'élément d'actionnement (20) présente un moyen de mise en prise, lequel coopère avec un filetage (42) agencé au niveau du contre-élément (10a, 10b) pour entraîner sa rotation.

9. Dispositif selon la revendication 8, **caractérisé en ce que** le premier filetage est un filetage intérieur (42) et le deuxième filetage est un filetage extérieur.

10. Dispositif selon la revendication 8, **caractérisé en ce que** le dispositif présente une barre de guidage (46) s'étendant parallèlement au contre-élément (10a, 10b) pour le guidage d'un mouvement de l'élément d'actionnement (20).

11. Dispositif selon la revendication 1, **caractérisé en ce que** l'élément d'actionnement (20) présente un corps en forme de plaque (62) agencé mobile par rapport au contre-élément (10a, 10b) avec un évidement (64), dans lequel au moins une section du contre-élément (10a, 10b) fait saillie.

12. Dispositif selon la revendication 11, **caractérisé en ce que** le corps en forme de plaque (62) est pivotant autour d'un axe de pivotement, lequel est parallèle à l'axe de rotation (Y) du contre-élément (10a, 10b).

13. Dispositif selon au moins l'une quelconque des revendications précédentes, **caractérisé en ce que** l'élément d'entraînement coopère avec un élément entraîné agencé côté extrémité au niveau du contre-élément (10a, 10b).

14. Moule de soufflage (1), en particulier pour un dispositif de transformation de préformes en plastique en récipients, dans lequel ce moule de soufflage (1) présente deux parties de moule (4, 3), lesquelles sont pivotantes l'une par rapport à l'autre autour d'un axe de liaison (2), avec au moins un élément de verrouillage (9) agencé au niveau d'une des parties de moule (4, 3), lequel coopère avec au moins un contre-élément (10a, 10b) agencé au niveau de l'autre partie de moule (3, 4), pour verrouiller l'un contre l'autre les deux parties de moule (4, 3), dans lequel le contre-élément (10a, 10b) est un contre-élément (10a, 10b) agencé autour d'un axe (Y, Y') agencé parallèlement à l'axe de liaison (2), lequel est rotatif entre une position de verrouillage, dans laquelle le moule de soufflage (1) est verrouillé, et une position de déverrouillage, dans laquelle le moule de soufflage (1) peut être ouvert, dans lequel le contre-élément (10a, 10b) est de nature telle que le contre-élément (10a, 10b) s'appuie, dans la position de verrouillage, au moins en partie sur l'élément de verrouillage (9) et libère l'élément de verrouillage (9) dans la position de déverrouillage, dans lequel un élément d'actionnement (20) est prévu pour la rotation du contre-élément (10a, 10b), **caractérisé en ce que** cet élément d'actionnement (20) est mobile en direction de l'axe de rotation (Y) du contre-élément (10a, 10b) et présente un élément d'entraînement, lequel coopère avec le contre-élément (10a, 10b) pour actionner celui-ci.
